# EUROPÄISCHE PATENTSCHRIFT

(11) **EP 2 899 304 B1**
(45) Veröffentlichungstag und Bekanntmachung des Hinweises auf die Patenterteilung: **25.01.2017**
(21) Anmeldenummer: 14001020.8
(22) Anmeldetag: 20.03.2014
(51) Int. Cl.: D04B 1/10, B60R 13/02, B64D 11/00, B64D 11/06, B60N 2/58

(54) **Verfahren zum Bezug zumindest zweier Sitze einer Sitzanordnung**
Method for covering at least two seats of a seating arrangement
Procédé de garnissage d'au moins deux sièges d'un système de sièges

(30) Priorität: 22.01.2014 DE 102014000665
(43) Veröffentlichungstag der Anmeldung: 29.07.2015
(73) Patentinhaber: rohi Stoffe GmbH, 82538 Geretsried (DE)
(72) Erfinder: Hielle-Dahm, Katrin, 82541 Münsing (DE)
(74) Vertreter: Demski, Siegfried

(56) Entgegenhaltungen:
- DE-U1-202005 011 116

## Beschreibung

Die Erfindung betrifft ein Verfahren zum Bezug zumindest zweier Sitze einer Sitzanordnung, insbesondere Sitze einer Flugzeugkabine, wobei jeder Sitz wenigstens ein Sitzkissen und eine Rückenlehne aufweist.

Bei dem aus dem Stand der Technik bekannten Verfahren zum Bezug mehrerer Sitze einer Sitzanordnung werden Stoffbahnen mit verschiedensten farblichen Gestaltungen verwendet. Hierbei kann es sich um unifarbige Stoffe oder um bemusterte Stoffe handeln. Dabei werden aus der Stoffbahn Zuschnitte ausgeschnitten, mit welchen anschließend die Sitzkissen, Rückenlehnen und gegebenenfalls Fußstützen, Kopfstützen und Armlehnen bezogen werden. Die Stoffbahn ist so gestaltet, dass die aus ihr erstellten Zuschnitte zu einem identischen optischen Erscheinungsbild der einzelnen Sitze und eventuell der Teile eines Sitzes wie Sitzkissen, Rückenlehnen usw. führen. Das optische Erscheinungsbild ist im Wesentlichen durch die Farben und übereinstimmenden Muster der Zuschnitte bestimmt. Die Farben sind so gewählt, dass sie mit der Umgebung beispielsweise der Seiten- und Bodenverkleidung einer Flugzeugkabine ein stimmiges Gesamtbild ergeben. Bisweilen orientieren sich die Farben an der Farbgebung des Firmenzeichens des Personentransportdienstleisters, wie zum Beispiel einer Airline. Hierbei werden vorzugsweise unifarbige Stoffe oder Stoffe mit einem kleinen Muster verwendet, um an den Schnitträndern die Musterangleichung zu reduzieren oder nur einen geringen Verschnitt aufgrund der Mustergröße zu erhalten.

Aus der DE 20 2005 011 116 U1 ist eine endlose textile Warenbahn zum Herstellen von Innenverkleidungen von Kraftfahrzeugen und Flugzeugen bekannt, welche eine durch vollflächige Wärmewalzprägung erzeugte reliefartige, dreidimensionale, unregelmäßig gemusterte Oberfläche mit bestimmter Rapportlänge aufweist. Bei Verwendung dieser textilen Warenbahn zum Bezug von Kraftfahrzeug- oder Flugzeugsitzen kommt es nach Angabe dieser Druckschrift nicht zu einem optisch wahrnehmbaren Verzug der textilen Warenbahn, sodass das optische Erscheinungsbild der bezogenen Sitze verbessert ist. Das Erscheinungsbild dieser Sitze ist bei jedem Sitz nahezu identisch.

Aufgabe der Erfindung ist es, ein Verfahren zum Bezug zumindest zweier Sitze einer Sitzanordnung mit einer Stoffbahn anzugeben, welches eine Individualisierung des optischen Erscheinungsbildes einzelner Sitze oder Teile davon bei gleichzeitiger Wahrung eines einheitlichen Gesamterscheinungsbildes ermöglicht, ohne dass mehrere unterschiedlich gestaltete Stoffbahnen verwendet werden müssen.

Zur Lösung der Aufgabe ist ein Verfahren vorgesehen, welches durch
- Bereitstellen einer gewebten Stoffbahn, wobei die Stoffbahn zumindest ein innerhalb eines Längsrapportes mehrfach auf der Stoffbahn angeordnetes Stilelement aufweist, welches in Form von zumindest einer lokalen Anhäufung, bestehend aus mindestens drei gleichen Stilelementen auf der Stoffbahn angeordnet ist und der Längsrapport eine Länge von mindestens 1,20 m aufweist,
- Ausschneiden mehrerer Zuschnitte aus der Stoffbahn und
- Bezug zumindest der Sitzkissen und Rückenlehnen der Sitze mit den Zuschnitten
gekennzeichnet ist. Weitere vorteilhafte Ausgestaltungen der Erfindung ergeben sich aus den Unteransprüchen.

Verfahrenswesentlich ist zum einen die Gestaltung der verwendeten Stoffbahn und zum anderen die Verwendung von Zuschnitten aus der Stoffbahn, welche bei erheblicher Reduzierung des Verschnittes aus der Stoffbahn geschnitten werden, zum Bezug der einzelnen Teile der Sitze, wie Sitzkissen, Rückenlehnen, Fußstützen, Kopfstützen, Armlehnen und gegebenenfalls dem Sitzshield. Bei den aus dem Stand der Technik bekannten Sitzbezügen, welche graphische Gestaltungselemente aufweisen, ergibt sich dadurch ein kostenrelevanter Verschnitt, dass die Gestaltungselemente stets an der gleichen Stelle des Sitzes oder Teilen davon angeordnet sein sollen, um ein identisches Erscheinungsbild der Sitze oder Teilen davon zu erreichen. Weist die für den Sitzbezug verwendete Stoffbahn beispielsweise mehrere sich über die Breite der Stoffbahn erstreckende und voneinander beabstandete Streifen auf und soll stets ein Streifen in der Mitte der Sitzteile (Rückenlehnen, Armlehnen, etc.) angeordnet sein, so müssen die für den Bezug der Sitzteile vorgesehenen Zuschnitte derart aus der Stoffbahn geschnitten werden, dass sich ein Streifen durch deren Mitte erstreckt. Bei größerem Abstand der Streifen auf der Stoffbahn kommt es dabei zu einem erheblichen Verschnitt. Auch bei unterschiedlichen Abmessungen der Sitzteile, wie beispielsweise den Sitzen verschiedener Komfortklassen einer Flugzeugkabine (Economy-Klasse, Business-Klasse) oder den Flugzeugkabinensitzen verschiedener Flugzeugtypen ergibt sich bei identischem Erscheinungsbild der Sitze ein kostenrelevanter Verschnitt. Die Reduzierung des Verschnittes vermindert die Kosten der Herstellung der Sitzbezüge. Unter Verschnitt ist dabei zu verstehen, dass die aus der Stoffbahn auszuschneidenden Zuschnitte nicht unmittelbar aneinandergrenzen, was dazu führt, dass der Bereich zwischen den Zuschnitten nicht verwendet wird und als Abfall entsorgt werden muss.

Das erfindungsgemäße Verfahren ermöglicht demgegenüber die Individualisierung eines Massenproduktes, wobei es sich in einem bevorzugten Ausführungsbeispiel bei dem Massenprodukt um die Sitze einer Flugzeugkabine handelt, da viele Airlines, zumal die großen, zahlreiche Flugzeugtypen zum Personentransport verwenden. Die Verwendung einer Stoffbahn in der erfindungsgemäßen Ausführung führt zu einer deutlich sichtbaren Individualisierung der einzelnen Sitze oder Teilen davon, sodass das optische Erscheinungsbild der Sitze voneinander verschieden ist. Durch die Gestaltung der Stoffbahn mit zumindest einem mehrfach auf der Stoffbahn angeordneten Stilelement, welches in Form von zumindest einer Anhäufung auf der Stoffbahn angeordnet ist. Durch die Farbgebung der Stilelemente oder die Farbgebung des Grundfarbtons wird aber das einheitliche Gesamterscheinungsbild bei gleichzeitiger Individualisierung eines Sitzes oder Teilen davon gewährleistet. Dieser Aspekt der Individualisierung einzelner Sitze oder Teile davon, bei gleichzeitiger Wahrung eines einheitlichen Gesamterscheinungsbildes, ist neben der Reduzierung des Verschnittes der wesentliche Aspekt des erfindungsgemäßen Verfahrens.

Unter Anhäufung eines Stilelementes wird hierbei verstanden, dass mindestens drei gleiche Stilelemente auf einem Abschnitt des Längsrapportes in größerer Zahl vorhanden sind als auf einem gleich großen anderen Abschnitt.

Der besondere Vorteil einer solchen gewebten Stoffbahn besteht darin, dass sämtliche Zuschnitte nicht an fest vorgegebener Stelle aus der Stoffbahn geschnitten werden müssen, sondern so aus der Stoffbahn geschnitten werden können, dass der Verschnitt möglichst gering ist, wobei automatisch eine Individualisierung der Sitze und Sitzteile erfolgt, da das wenigstens eine Stilelement in Form von zumindest einer lokalen Anhäufung auf der Stoffbahn angeordnet ist. Die Form und/oder die Anordnung und/oder die Farbe der Stilelemente kann so gewählt sein, dass der Übergang von einem Längsrapport zum anderen fließend ist. Dies kann zum Beispiel dadurch geschehen, dass gleiche Stilelemente von einem Längsrapport in den nächsten übergehen.

Das erfindungsgemäße Verfahren wird bevorzugt zum Bezug von Sitzen einer Flugzeugkabine angewendet.

Die Stoffbahn ist derart gestaltet, dass der Längsrapport eine Länge von mindestens 1,20 m aufweist, vorzugsweise jedoch eine Länge von 3 m bis 10 m. Dieses Maß ergibt sich daraus, dass die Sitze der Economy-Klasse einer Flugzeugkabine ein Sitzkissen mit einer Länge von mindestens 45 cm und eine Rückenlehne mit einer Länge von mindestens 75 cm aufweisen. Dadurch kann zumindest ein Sitzkissen und eine Rückenlehen mit Zuschnitten aus einem Längsrapport bezogen werden, wobei jedoch der angestrebte Individualisierungseffekt erst eintritt, wenn mehrere Sitzkissen und Rückenlehnen mit Zuschnitten aus einem Längsrapport bezogen werden. Je größer der Längsrapport ist, desto größer ist auch die Individualisierung der einzelnen Sitze oder Teilen davon, wobei jedoch die Länge des Längsrapportes durch den Gestaltungsaufwand und den Herstellungsaufwand begrenzt ist. Vorzugsweise wird zum Bezug von Flugzeugsitzen ein Längsrapport von 3 m bis 10 m verwendet, sodass die Bezüge mehrerer Sitzkissen und Rückenlehnen aus einem Längsrapport geschnitten werden können, wodurch die einzelnen Sitze beziehungsweise deren Teile zwar ein einheitliches Gesamterscheinungsbild erhalten, deren optische Gestaltungen aber dennoch durch die gehäufte Anordnung zumindest eines Stilelementes auf der Stoffbahn jeweils individualisiert sind, da nicht jeder Abschnitt des Längsrapportes zwangsläufig auf jedem Sitz oder einem Teil davon vorhanden ist. Durch einen größeren Längsrapport wird hierbei die Zuschnittvariation und Optimierungsmöglichkeit verbessert, sodass ein äußerst geringer Verschnitt erzielt wird und damit die Kosten eines einzelnen Sitzbezuges reduziert werden können.

In besonderer Ausgestaltung des erfindungsgemäßen Verfahrens weist das Stilelement innerhalb einer Anhäufung in Längsrichtung und/oder Querrichtung der Stoffbahn eine unterschiedliche Flächendichte auf. Durch eine unterschiedliche Flächendichte eines Stilelementes innerhalb einer Anhäufung ist eine weitere Variationsmöglichkeit der optischen Gestaltung gegeben, da sich eine Anhäufung innerhalb eines Längsrapportes auch über größere Bereiche erstrecken kann, wobei es sich um ein Stilelement in einer Farbe oder in unterschiedlichen Farben und/oder unterschiedlichen oder gleichen Größen handeln kann.

Auf der Stoffbahn können innerhalb eines Längsrapportes ebenso ein oder mehrere Stilelemente vorhanden sein, welche unterschiedliche oder gleiche Farben und/oder unterschiedliche oder gleiche Größen aufweisen können. Ebenso ist es möglich, dass mehrere Stilelemente innerhalb eines Längsrapportes angeordnet sind, welche stets die gleiche Farbe aufweisen. Ferner ist es möglich, dass innerhalb eines Längsrapportes mehrere Stilelemente vorhanden sind, welche stets die gleiche Farbe, aber jeweils unterschiedliche Größen aufweisen.

Die genannte Flächendichte der auf der Stoffbahn angeordneten Stilelemente ist auf einen Abschnitt der Stoffbahn mit einer Länge von 0,1 m bis 2 m, vorzugsweise von 0,2 m, bezogen. Dies bedeutet, dass die Flächendichte eines Stilelementes aus der Anzahl des Stilelementes auf einem quadratischen Abschnitt der Stoffbahn mit einer Kantenlänge von 0,1 m bis 2 m ermittelt wird.

In besonders bevorzugter Ausgestaltung des erfindungsgemäßen Verfahrens weist die Stoffbahn zwei oder mehr Anhäufungen eines Stilelementes innerhalb des Längsrapportes in Längs- und/oder Querrichtung auf. Durch die Anordnung des zumindest einen Stilelementes in Form von mehreren Anhäufungen wird besonders augenscheinlich eine Individualisierung des optischen Erscheinungsbildes bewirkt, insbesondere ohne dass es dabei notwendig ist, das Stilelement in verschiedenen Farben auf der Stoffbahn anzuordnen. Ein Betrachter wird in dieser Ausgestaltung der Stoffbahn auch bei gleicher Farbgebung des Stilelementes sofort den individuellen Charakter des optischen Erscheinungsbildes der Sitze und Sitzteile erkennen.

In weiterer Ausgestaltung des erfindungsgemäßen Verfahrens kann vorgesehen sein, dass die Stoffbahn zwei oder mehr Anhäufungen mehrerer Stilelemente innerhalb des Längsrapportes in Längs- und/oder Querrichtung aufweist. Durch die Anordnung mehrerer Anhäufungen von zwei oder mehr Stilelementen, wobei die Anhäufungen eine unterschiedliche Dichte an Stilelementen aufweisen können, kann eine Individualisierung des optischen Erscheinungsbildes eines Sitzes und der Teile davon bei gleichzeitiger Wahrung eines Gesamterscheinungsbildes nachhaltig bewirkt werden. Dabei ist es dem Entwerfer der Stoffbahn überlassen ist, die Individualisierung des optischen Erscheinungsbildes einzelner Zuschnitte nur soweit zu berücksichtigen, dass ein einheitliches Gesamterscheinungsbild gewahrt bleibt.

Es kann ferner vorgesehen sein, dass zumindest ein Stilelement nur innerhalb einer Anhäufung vorhanden ist, und/oder dass zumindest ein Stilelement außerhalb von vorhandenen Anhäufungen angeordnet ist. In ersterem Fall kann ein Stilelement auf der Stoffbahn mehrfach in Form einer Anhäufung angeordnet sein und ist außerhalb dieser Anhäufung auf der Stoffbahn nicht vorhanden. In letzterem Fall kann ein Stilelement zwar mehrfach auf der Stoffbahn in Form einer Anhäufung angeordnet, jedoch auch abseits dieser Anhäufung auf der Stoffbahn angeordnet sein, wobei die Häufigkeit des Vorkommens des Stilelementes abseits der Anhäufung beispielsweise proportional zum Abstand von der Anhäufung abnehmen, zunehmen oder anderweitig variieren kann.

Das wenigstens eine Stilelement kann aus einer linienförmigen oder flächigen Figur, die offen oder geschlossen sind, einer geometrischen, amorphen oder floralen Form einer polygonförmigen Linie oder einzelnen, in sich abgeschlossenen Stilelementen bestehen. Bei den linienförmigen Figuren kann es sich um Kreis-, Stern-, Rauten- oder Blumenmuster etc. handeln. Im einfachsten Fall kann es sich bei den linienförmigen Figuren auch um einfache gerade Linien handeln, welche sich senkrecht zu der Längserstreckung der Stoffbahn, in einem beliebigen anderen oder sogar schwankenden Winkel erstrecken. Unter flächigen Figuren sind Figuren zu verstehen, welche aus flächigen farblichen Bereichen bestehen, wobei die Farbe der flächigen Bereiche, wie bereits angegeben, von der Grundfarbe verschieden ist. Unter einer polygonförmigen Linie wird eine Linie verstanden, welche aus einzelnen, sich aneinander anschließenden, geraden Linienzügen besteht. Unter einzelnen, in sich abgeschlossenen Stilelementen werden solche Stilelemente verstanden, welche aus geraden oder gekrümmten Linien bestehen und keine offenen Enden aufweisen, wie beispielsweise Kreise, Vierecke, Rauten, Blumendarstellungen oder andere geometrische Figuren.

In weiterer Ausgestaltung der Erfindung kann vorgesehen sein, dass die Stoffbahn eine einheitliche Grundfarbe aufweist. Die Wahrung eines einheitlichen Gesamterscheinungsbildes kann vorteilhaft durch die Grundfarbe, welche auf dem gesamtem Längsrapport vorhanden ist und dabei zwischen mehreren gleichen oder verschiedenen Stilelementen und/oder innerhalb von Stilelementen vorhanden ist, erreicht werden. Unter Grundfarbe wird hierbei die Farbe verstanden, die die größte Fläche auf der Stoffbahn ausfüllt und auf dem gesamten Längsrapport vorhanden ist. Die Grundfarbe kann hierbei durch linienförmige Stilelemente eingefasst sein, sodass sich die Grundfarbe auch innerhalb der Stilelemente befindet. Es kann dabei vorgesehen sein, dass die Stilelemente eine von der Grundfarbe abweichende Farbe aufweisen, wobei die Grundfarbe auf dem gesamten Längsrapport zwischen den mehrfach angeordneten Stilelementen und/oder innerhalb der Stilelemente vorhanden ist. Ferner kann vorgesehen sein, dass die Stoffbahn über die gesamte Länge eines Längsrapportes einen Farbverlauf aufweist, wobei ein einheitliches Gesamterscheinungsbild dann durch die Farbe der auf der Stoffbahn angeordneten Stilelemente bewirkt wird, welche stets gleich oder nur geringfügig voneinander abweichend gewählt sein kann.

Die Verwendung einer gewebten Stoffbahn mit den geschilderten Merkmalen zum Bezug zumindest zweier Sitze einer Sitzanordnung, insbesondere Sitzen einer Flugzeugkabine, ist unabhängig weiterer Verfahrensschritte ebenfalls Gegenstand der Erfindung.

Die Erfindung wird im Weiteren anhand der Figuren näher erläutert. Es zeigt
- Fig. 1: eine erste Ausgestaltung eines Längsrapportes einer Stoffbahn zur Anwendung des erfindungsgemäßen Verfahrens,
- Fig. 2: eine zweite Ausgestaltung eines Längsrapportes einer Stoffbahn zur Anwendung des erfindungsgemäßen Verfahrens,
- Fig. 3: eine dritte Ausgestaltung eines Längsrapportes einer Stoffbahn zur Anwendung des erfindungsgemäßen Verfahrens,
- Fig. 4: eine vierte Ausgestaltung eines Längsrapportes einer Stoffbahn zur Anwendung des erfindungsgemäßen Verfahrens und
- Fig. 5: einen Teil einer Sitzanordnung, welcher aus drei gemäß dem erfindungsgemäßen Verfahren mit einer Stoffbahn bezogenen Sitzen besteht.

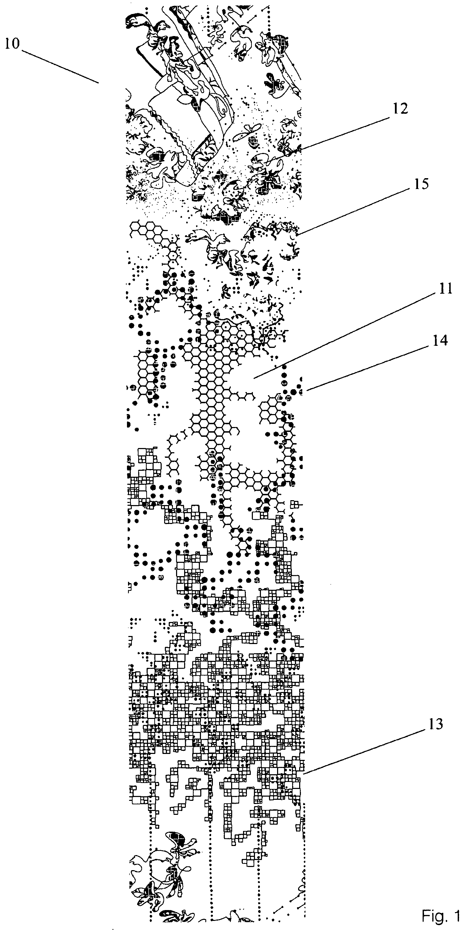

Figur 1 zeigt eine erste Ausgestaltung eines Längsrapportes einer Stoffbahn 10 zur Anwendung des erfindungsgemäßen Verfahrens. Die Stoffbahn 10 weist eine Grundfarbe 11 und Stilelemente 12, 13, 14, 15 auf. Die Stilelemente 12, 13, 14, 15 sind in Form von lokalen Anhäufungen innerhalb des Längsrapportes der Stoffbahn 10 angeordnet. Bei den Stilelementen 12 handelt es sich um Linienfiguren, welche Blumenmuster 15 umhüllen. Bei den Stilelementen 13 handelt es sich um Linienfiguren in Form von unterschiedlich großen Quadraten. Bei den Stilelementen 14 handelt es sich um flächige Figuren in Form von Kreisen.

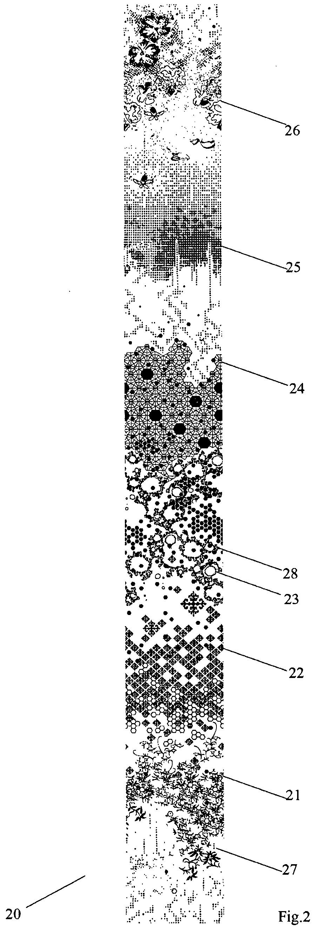

Figur 2 zeigt eine zweite Ausgestaltung eines Längsrapportes einer Stoffbahn 20 zur Anwendung des erfindungsgemäßen Verfahrens. Die Stoffbahn 20 weist eine Grundfarbe 27 und mehrere verschiedene Stilelemente 21, 22, 23, 24, 25, 26, 28 auf. Die Stilelemente 21, 22, 23, 24, 25, 26, 28 sind in Form von lokalen Anhäufungen innerhalb eines Längsrapportes der Stoffbahn 20 angeordnet. Bei den Stilelementen 21 handelt es sich um flächige Blumenfiguren. Bei den Stilelementen 22 handelt es sich um flächige, aber strukturierte und gegenüber der Erstreckungsrichtung der Stoffbahn 20 geneigte, quadratische Figuren. Bei den Stilelementen 23 handelt es sich um flächige Kreise einer ersten von der Grundfarbe 27 verschiedenen Farbe. Bei den Stilelementen 28 handelt es sich ebenfalls um flächige Kreise einer zweiten von der Grundfarbe 27 verschiedenen Farbe. Bei den Stilelementen 24 handelt es sich um linienförmige Spinnennetzmuster. Bei den Stilelementen 25 handelt es sich um im Vergleich zu den Stilelementen 23, 28 sehr kleine farblich gefüllte Punkte. Bei den Stilelementen 26 handelt es sich um linienförmige Blumenfiguren. Alle Stilelemente 21, 22, 23, 24, 25, 26, 28 sind mehrfach auf der Stoffbahn 20 in Form von lokalen Anhäufungen angeordnet.

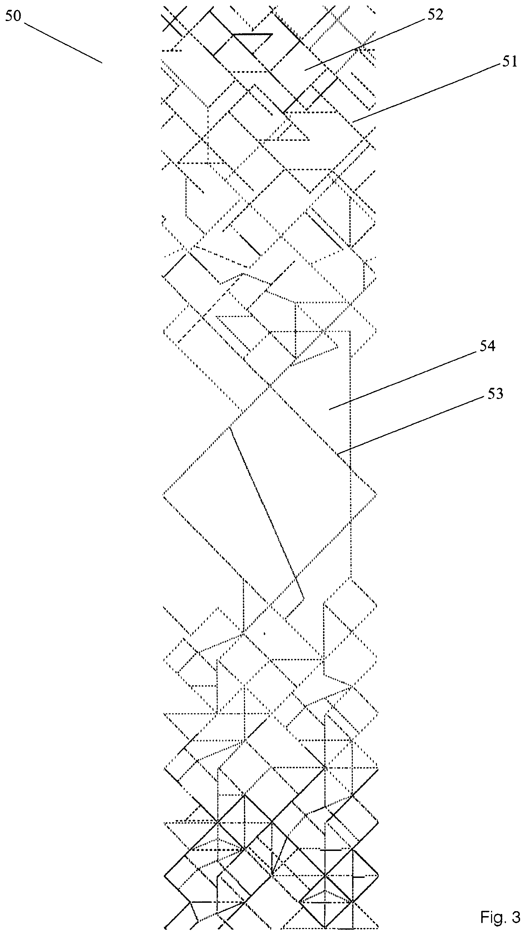

Figur 3 zeigt eine dritte Ausgestaltung einer Stoffbahn 50 zur Anwendung des erfindungsgemäßen Verfahrens. Die Stoffbahn 50 weist eine Grundfarbe 54 und Stilelemente 51, 52, 53 auf, wobei es sich bei dem Stilelement 51 um eine gestrichelte Linie in einer ersten Farbe, bei dem Stilelement 52 um eine durchgezogene Linie in der ersten Farbe und bei dem Stilelement 53 um eine gestrichelte Linie in einer zweiten Farbe handelt. Die Stilelemente 51 und 52 häufen sich in der Umgebung des Anfangs und des Endes des Längsrapportes, wohingegen sie in der Mitte des Längsrapportes nicht auf der Stoffbahn 50 angeordnet sind. Das Stilelement 53 häuft sich ebenfalls in der Umgebung des Anfangs und des Endes des Längsrapportes, wobei sich die Anhäufungen des Stilelementes 53 über die Anhäufungen der Stilelemente 51 und 52 hinaus auf dem Längsrapport der Stoffbahn 50 erstrecken. Im Mittelbereich eines Längsrapportes der Stoffbahn 50 ist das Stilelement 53 vereinzelt angeordnet, wohingegen die Stilelemente 51 und 52 im Mittelbereich des Längsrapportes nicht angeordnet sind.

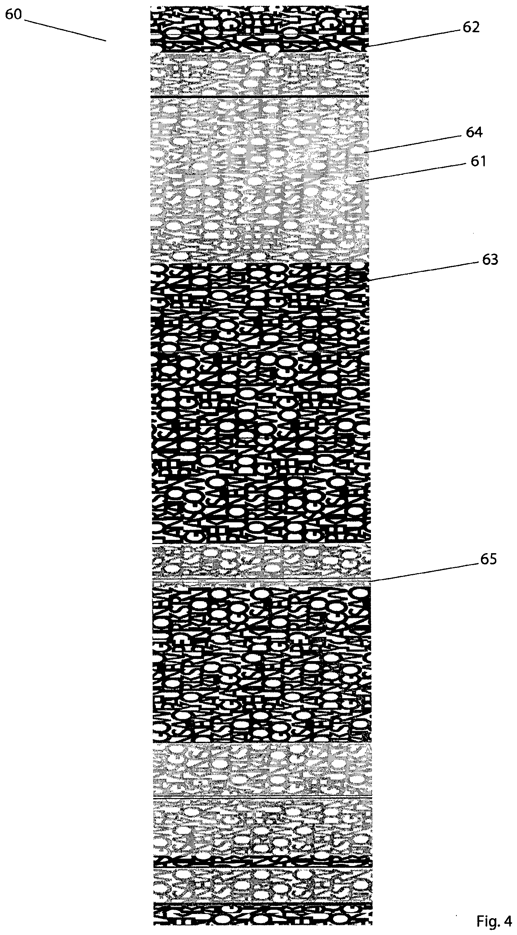

Figur 4 zeigt eine vierte Ausgestaltung eines Längsrapportes einer Stoffbahn 60 zur Anwendung des erfindungsgemäßen Verfahrens. Die Stoffbahn 60 weist eine Grundfarbe 61 und Stilelemente 62, 63, 64, 65 auf. Die Stoffbahn 60 weist innerhalb des dargestellten Längsrapportes vier Anhäufungen auf. Das Stilelement 63 weist innerhalb des Längsrapportes vier Anhäufungen auf, das Stilelement 62 weist innerhalb des Längsrapportes zwei Anhäufungen auf und das Stilelement 65 weist innerhalb des Längsrapportes mehrere Anhäufungen auf. Bei dem Stilelement 65 handelt es sich um eine gerade Linie, welche sich senkrecht zu der Erstreckungsrichtung der Stoffbahn erstreckt, sodass Anhäufungen des Stilelementes 65 die Form von breiteren Streifen aufweisen. Bei den Stilelementen 62, 63, 64 handelt es sich um Buchstaben, wobei die Stilelemente 62, 63, 64 voneinander abweichende Farben aufweisen.

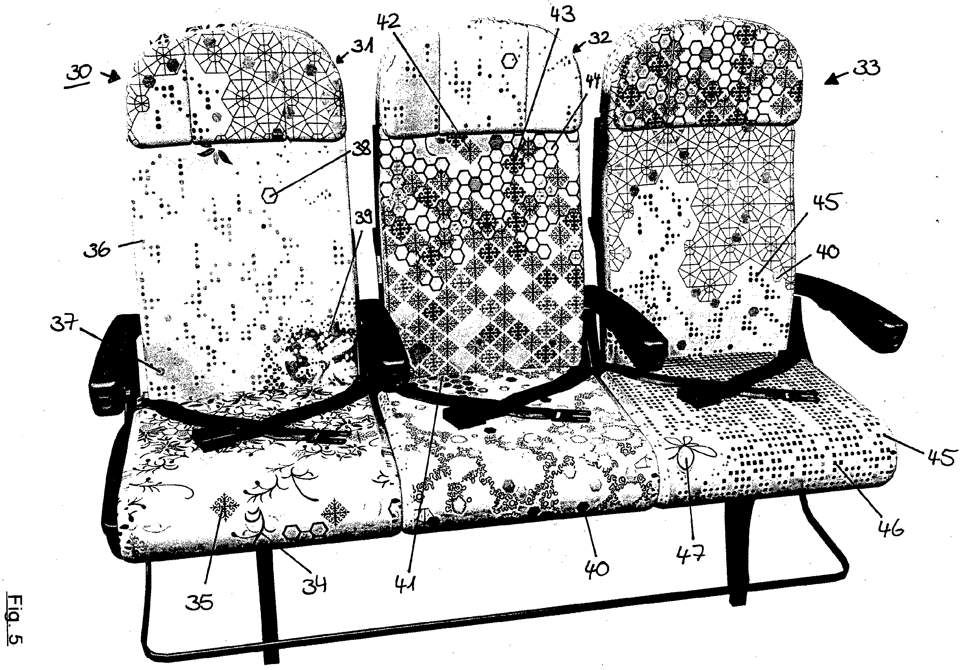

Figur 5 zeigt einen Teil 30 einer Sitzanordnung, welcher aus drei Sitzen 31, 32, 33 besteht. Die Sitzteile der Sitze 31, 32, 33, das heißt die Sitzkissen und Rückenlehnen sind mit einer Stoffbahn gemäß dem erfindungsgemäßen Verfahren bezogen. Die Sitzkissen der Sitze 31, 32, 33 weisen eine Länge von ca. 45 cm auf und die Rückenlehnen der Sitze 31, 32, 33 weisen eine Länge von ungefähr 75 cm auf. Die Sitzteile der Sitze 31, 32, 33 sind mit Zuschnitten derselben Stoffbahn bezogen, wobei die Stoffbahn einen Längsrapport von 6 m aufweist. Durch die Gestaltung der Stoffbahn mit einer Grundfarbe und mehreren, mehrfach auf der Stoffbahn in Form von lokalen Anhäufungen angeordneten Stilelementen 34, 35, 36, 37, 38, 39, 40, 41, 42, 43, 44, 45, 46, 47 weisen sowohl die Sitzkissen als auch die Rückenlehnen der Sitze 31, 32, 33 ein individualisiertes Erscheinungsbild bei gleichzeitig gewahrtem Gesamteindruck auf. So häufen sich auf dem Sitzkissen des Sitzes 31 Stilelemente 34 in Form von flächigen Blumenfiguren, wohingegen das Stilelement 35 in Form eines geneigten Quadrates mit Innenstruktur nur vereinzelt auf dem Sitzkissen angeordnet ist. Auf der Rückenlehne des Sitzes 31 häuft sich das Stilelement 36 in Form von kleinen flächigen Kreisen, wohingegen Stilelemente 37 in Form von größeren flächigen Kreisen, Stilelemente 38 in Form von Sechsecken oder Stilelemente 39 nur vereinzelt oder mit größerem Abstand zueinander auf der Rückenlehne angeordnet sind. Auf dem Sitzkissen des Sitzes 32 häufen sich Stilelemente 40, 41 in Form von flächigen Sechsecken, wobei sich die Stilelemente 40, 41 durch ihre Farbe voneinander unterscheiden. Auf der Rückenlehne des Sitzes 32 häufen sich Stilelemente 42, 43 in Form eines geneigten Quadrates und Stilelement 44 in Form von Sechsecken, welche dagegen nicht auf der Sitzfläche des Sitzes 32 angeordnet sind. Auf der Sitzfläche des Sitzes 33 häufen sich Stilelemente 45 in Form von kleinen flächigen Kreisen und Stilelemente 46 in Form von kleinen flächigen Quadraten. Das Stilelement 47 in Form einer linienförmigen Blumenfigur ist dagegen nur vereinzelt auf der Sitzfläche angeordnet. Auf der Rückenlehne des Sitzes 33 häufen sich ebenfalls Stilelemente 45 in Form von kleinen flächigen Kreisen, wobei jedoch die Stilelemente 46 nicht auf der Rückenlehne des Sitzes 33 angeordnet sind. Dagegen sind vereinzelt Stilelemente 40 in Form von flächigen Sechsecken auf der Rückenlehne angeordnet.

Bei diesem Teil der Sitzanordnung sorgt die dominierende Grundfarbe für einen einheitlichen Gesamteindruck. Durch die verschiedenen Stilelemente, welche sich auf den Teilen der Sitze 31, 32, 33 häufen, wird zugleich jedoch eine Individualisierung der einzelnen Sitze und der Teile davon bewirkt. Durch diese angestrebte Individualisierung können die Zuschnitte optimiert werden und führen zu einer Reduzierung des Verschnittes, sodass neben der Individualisierung der Sitze und Teilen davon eine Senkung der Herstellungskosten des Sitzbezuges erreicht wird. Das vereinzelte Vorkommen von Stilelementen kommt dadurch zustande, dass diese auch abseits von Anhäufungen angeordnet sind. Jedes Stilelement ist jedoch mindestens in einer Anhäufung innerhalb des Längsrapportes angeordnet. Die Stoffbahn, mit welcher die Sitze 31, 32, 33 gemäß Figur 5 bezogen sind, weist einen Längsrapport von 6 m auf, wobei die auf dem gesamten Längsrapport vorhandene Grundfarbe die Wahrung eines einheitlichen Gesamterscheinungsbildes bewirkt - bei gleichzeitiger Individualisierung der Sitze und deren Teilen durch die Stilelemente. Diese Wirkung kann in befriedigender Weise nur mit einer Stoffbahn mit einem Längsrapport von mindestens 1,20 m erreicht werden, da dann nicht zwangsläufig jeder Abschnitt des Längsrapportes auf jedem Sitz vorhanden ist.

### Bezugszeichenliste

- 10: Stoffbahn
- 11: Grundfarbe
- 12: Stilelement
- 13: Stilelement
- 14: Stilelement
- 15: Stilelement
- 20: Stoffbahn
- 21: Stilelement
- 22: Stilelement
- 23: Stilelement
- 24: Stilelement
- 25: Stilelement
- 26: Stilelement
- 27: Grundfarbe
- 28: Stilelement
- 30: Teil einer Sitzanordnung
- 31: Sitz
- 32: Sitz
- 33: Sitz
- 34: Stilelement
- 35: Stilelement
- 36: Stilelement
- 37: Stilelement
- 38: Stilelement
- 39: Stilelement
- 40: Stilelement
- 41: Stilelement
- 42: Stilelement
- 43: Stilelement
- 44: Stilelement
- 45: Stilelement
- 46: Stilelement
- 47: Stilelement
- 50: Stoffbahn
- 51: Stilelement
- 52: Stilelement
- 53: Stilelement
- 54: Grundfarbe
- 60: Stoffbahn
- 61: Grundfarbe
- 62: Stilelement
- 63: Stilelement
- 64: Stilelement
- 65: Stilelement

## Patentansprüche

1. Verfahren zum Bezug zumindest zweier Sitze (31, 32, 33) einer Sitzanordnung, insbesondere Sitze (31, 32, 33) einer Flugzeugkabine, wobei jeder Sitz (31, 32, 33) wenigstens ein Sitzkissen und eine Rückenlehne aufweist,
**gekennzeichnet durch**
- Bereitstellen einer gewebten Stoffbahn (10, 20, 50, 60), wobei die Stoffbahn (10, 20, 50, 60) zumindest ein innerhalb eines Längsrapportes mehrfach auf der Stoffbahn (10, 20, 50, 60) angeordnetes Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) aufweist, welches in Form von zumindest einer lokalen Anhäufung, bestehend aus mindestens drei gleichen Stilelementen auf der Stoffbahn (10, 20, 50, 60) angeordnet ist und der Längsrapport eine Länge von mindestens 1,20 m aufweist,
- Ausschneiden mehrerer Zuschnitte aus der Stoffbahn (10, 20, 50, 60) und
- Bezug zumindest der Sitzkissen und Rückenlehnen der Sitze (31, 32, 33) mit den Zuschnitten.

2. Verfahren nach Anspruch 1,
**dadurch gekennzeichnet,**
**dass** der Längsrapport eine Länge von 3 m bis 10 m aufweist.

3. Verfahren nach Anspruch 1 oder 2,
**dadurch gekennzeichnet,**
**dass** das Stilelement (12, 13, 14, 15, 21, 22, 23, 24, 25, 26, 28, 34, 35, 36,37,38,39,40,41,42,43,44,45,46,47,51,52,53,62,63,64,65) innerhalb einer Anhäufung in Längsrichtung und/oder Querrichtung der Stoffbahn (10, 20, 50, 60) eine unterschiedliche Flächendichte aufweist.

4. Verfahren nach wenigstens einem der Ansprüche 1 bis 3,
**dadurch gekennzeichnet,**
**dass** ein Stilelement (12, 13, 14, 15, 21, 22, 23, 24, 25, 26, 28, 34, 35, 36,37,38,39,40,41,42,43,44,45,46,47,51,52,53,62,63,64,65) in verschiedenen oder identischen Farben und/oder Größen innerhalb eines Längsrapportes angeordnet ist.

5. Verfahren nach wenigstens einem der Ansprüche 1 bis 4,
**dadurch gekennzeichnet,**
**dass** mehrere Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) vorhanden sind, welche unterschiedliche oder gleiche Farben und/oder unterschiedliche oder gleiche Größen aufweisen.

6. Verfahren nach Anspruch 3,
**dadurch gekennzeichnet,**
**dass** die Flächendichte auf einen Abschnitt der Stoffbahn (10, 20, 50, 60) mit einer Länge von 0,1 m bis 2 m, vorzugsweise 0,2 m, bezogen ist.

7. Verfahren nach wenigstens einem der Ansprüche 1 bis 6,
**dadurch gekennzeichnet,**
**dass** die Stoffbahn (10, 20, 50, 60) zwei oder mehr Anhäufungen eines Stilelementes (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) innerhalb des Längsrapportes in Längs- und/oder Querrichtung aufweist, und/oder dass die Stoffbahn (10, 20, 50, 60) zwei oder mehr Anhäufungen mehrerer Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) innerhalb des Längsrapports in Längs- und/oder Querrichtung aufweist.

8. Verfahren nach wenigstens einem der Ansprüche 1 bis 7,
**dadurch gekennzeichnet,**
**dass** zumindest ein Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) nur innerhalb einer Anhäufung vorhanden ist, und/oder dass zumindest ein Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) außerhalb von vorhandenen Anhäufungen angeordnet ist.

9. Verfahren nach wenigstens einem der Ansprüche 1 bis 8,
**dadurch gekennzeichnet,**
**dass** das wenigstens eine Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) aus einer linienförmigen oder flächigen Figur, die offen oder geschlossen sind, einer geometrischen, amorphen oder floralen Form, einer polygonförmigen Linie oder einzelnen, in sich abgeschlossenen Stilelementen (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) besteht.

10. Verfahren nach wenigstens einem der Ansprüche 1 bis 9,
**dadurch gekennzeichnet,**
**dass** die Stoffbahn (10, 20, 50, 60) eine einheitliche Grundfarbe (11, 27, 54, 61) aufweist, oder dass die Stoffbahn (10, 20, 50, 60) über die gesamte Länge eines Längsrapports einen Farbverlauf aufweist.

11. Verfahren nach wenigstens einem der Ansprüche 1 bis 10,
**dadurch gekennzeichnet,**
**dass** die Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) eine von der Grundfarbe (11, 27, 54, 61) abweichende Farbe aufweisen, wobei die Grundfarbe (11, 27, 54, 61) auf dem gesamten Längsrapport zwischen den mehrfach angeordneten Stilelementen (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) und/oder innerhalb der Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) vorhanden ist.

12. Verwendung einer gewebten Stoffbahn (10, 20, 50, 60) zum Bezug zumindest zweier Sitze (31, 32, 33) einer Sitzanordnung, insbesondere Sitze (31, 32, 33) einer Flugzeugkabine, wobei jeder Sitz (31, 32, 33) wenigstens ein Sitzkissen und eine Rückenlehne aufweist,
**dadurch gekennzeichnet,**
**dass** die Stoffbahn (10, 20, 50, 60) einen Längsrapport mit einer Länge von mindestens 1,20 m aufweist, wobei die Stoffbahn (10, 20, 50, 60) zumindest ein innerhalb eines Längsrapportes mehrfach auf der Stoffbahn (10, 20, 50, 60) angeordnetes Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) aufweist, welches in Form von zumindest einer lokalen Anhäufung, bestehend aus mindestens drei gleichen Stilelementen auf der Stoffbahn (10, 20, 50, 60) angeordnet ist.

13. Verwendung nach Anspruch 12,
**dadurch gekennzeichnet,**
**dass** das Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) innerhalb einer Anhäufung in Längsrichtung und/oder Querrichtung der Stoffbahn (10, 20, 50, 60) eine unterschiedliche Flächendichte aufweist, und/oder dass ein Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) in verschiedenen oder identischen Farben und/oder innerhalb eines Längsrapportes angeordnet ist, und/oder dass mehrere Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) vorhanden sind, welche unterschiedliche oder gleiche Farben und/oder unterschiedliche oder gleiche Größen aufweisen.

14. Verwendung nach Anspruch 12 oder 13,
**dadurch gekennzeichnet,**
**dass** die Stoffbahn (10, 20, 50, 60) zwei oder mehr Anhäufungen eines Stilelementes (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) innerhalb des Längsrapportes in Längs- und/oder Querrichtung aufweist, und/oder dass die Stoffbahn (10, 20, 50, 60) zwei oder mehr Anhäufungen mehrerer Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) innerhalb des Längsrapportes in Längs- und/oder Querrichtung aufweist.

15. Verwendung nach Anspruch 12, 13 oder 14,
**dadurch gekennzeichnet,**
**dass** das Stilelement (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) aus einer linienförmigen oder flächigen Figur, die offen oder geschlossen sind, einer geometrischen, amorphen oder floralen Form, einer polygonförmigen Linie oder einzelnen, in sich abgeschlossenen Stilelementen (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) besteht.

16. Verwendung nach wenigstens einem der Ansprüche 12 bis 15,
**dadurch gekennzeichnet,**
**dass** die Stoffbahn (10, 20, 50, 60) eine einheitliche Grundfarbe (11, 27, 54, 61) aufweist, oder dass die Stoffbahn (10, 20, 50, 60) über die gesamte Länge eines Längsrapports einen Farbverlauf aufweist, und/oder dass die Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) eine von der Grundfarbe (11, 27, 54, 61) abweichende Farbe aufweisen, wobei die Grundfarbe (11, 27, 54, 61) auf dem gesamten Längsrapport zwischen den mehrfach angeordneten Stilelementen (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) und/oder innerhalb der Stilelemente (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) vorhanden ist.

17. Verwendung nach Anspruch 14,
**dadurch gekennzeichnet,**
**dass** die Sitzteile nach wenigstens einem der Ansprüche 1 bis 16 mit einer gewebten Stoffbahn (10, 20, 50, 60) bezogen sind.

## Claims

1. Method of upholstering at least two seats (31, 32, 33) of a seat arrangement, in particular seats (31, 32, 33) of an aircraft cabin, wherein each seat (31, 32, 33) comprises at least one seat cushion and one backrest, **characterized by**
- providing a woven web of fabric (10, 20, 50, 60), wherein the web of fabric (10, 20, 50, 60) comprises at least one stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) multiply arranged on the web of fabric (10, 20, 50, 60) within one longitudinal repeating pattern, the stylistic element being arranged in the form of at least one local accumulation consisting of at least three equal stylistic elements on the web of fabric (10, 20, 50, 60), and the longitudinal repeating pattern has a length of at least 1.20 m,
- cutting out several cuttings from the web of fabric (10, 20, 50, 60), and
- upholstering at least the seat cushions and backrests of the seats (31, 32, 33) with said cuttings.

2. Method according to claim 1, **characterized in that** the longitudinal repeating pattern has a length of 3 m to 10 m.

3. Method according to claim 1 or 2, **characterized in that** the stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) has different masses per unit area within one accumulation in the longitudinal direction and/or the cross direction of the web of fabric (10, 20, 50, 60).

4. Method according to at least one of claims 1 to 3, **characterized in that** a stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) is arranged in different or identical colours and/or sizes within one longitudinal repeating pattern.

5. Method according to at least one of claims 1 to 4, **characterized in that** several stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) are present and have different or equal colours and/or different or equal sizes.

6. Method according to claim 3, **characterized in that** the mass per unit area is related to a section of the web of fabric (10, 20, 50, 60) having a length of 0.1 1 to 2 m, preferably 0.2 m.

7. Method according to at least one of claims 1 to 6, **characterized in that** the web of fabric (10, 20, 50, 60) comprises two or more accumulations of a stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) within the longitudinal repeating pattern in the longitudinal and/or cross direction, and/or that the web of fabric (10, 20, 50, 60) comprises two or more accumulations of several stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) within the longitudinal repeating pattern in the longitudinal and/or the cross direction.

8. Method according to at least one of claims 1 to 7, **characterized in that** at least one stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) is only present within one accumulation, and/or that at least one stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) is arranged outside of present accumulations.

9. Method according to at least one of claims 1 to 8, **characterized in that** said at least one stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) consists of a linear or areal figure which is open or closed, a geometric, amorphous or floral form, a polygonal line or individual, self-contained stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

10. Method according to at least one of claims 1 to 9, **characterized in that** the web of fabric (10, 20, 50, 60) has a uniform basic colour (11, 27, 54, 61), or that the web of fabric (10, 20, 50, 60) has a colour gradient across the complete length of a longitudinal repeating pattern.

11. Method according to at least one of claims 1 to 10, **characterized in that** the stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) have a colour different from the basic colour (11, 27, 54, 61), the basic colour (11, 27, 54, 61) being present on the complete longitudinal repeating pattern between the multiply arranged stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) and/or within the stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

12. Use of a woven web of fabric (10, 20, 50, 60) for upholstering at least two seats (31, 32, 33) of a seat arrangement, in particular seats (31, 32, 33) of an aircraft cabin, wherein each seat (31, 32, 33) comprises at least one seat cushion and one backrest, **characterized in that** the web of fabric (10, 20, 50, 60) comprises a longitudinal repeating pattern having a length of at least 1.20 m, the web of fabric (10, 20, 50, 60) comprising at least one stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) multiply arranged on the web of fabric (10, 20, 50, 60) within one longitudinal repeating pattern, the stylistic element being arranged on the web of fabric (10, 20, 50, 60) in the form of at least one local accumulation consisting of at least three equal stylistic elements.

13. Use according to claim 12, **characterized in that** the stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) comprises different masses per unit area within one accumulation in the longitudinal direction and/or cross direction of the web of fabric (10, 20, 50, 60), and/or that a stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) is arranged in different or identical colours and/or within one longitudinal repeating pattern, and/or that several stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) are present and have different or equal colours and/or different or equal sizes.

14. Use according to claim 12 or 13, **characterized in that** the web of fabric (10, 20, 50, 60) comprises two or more accumulations of a stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) within the longitudinal repeating pattern in the longitudinal and/or cross direction, and/or that the web of fabric (10, 20, 50, 60) comprises two or more accumulations of several stylistic elements (12, 13, 14, 15, 21, 22; 23, 24, 25, 26, 28, 34, 35, 36, 37, 38, 39, 40, 41, 42, 43, 44, 45, 46, 47, 51, 52, 53, 62, 63, 64, 65) within the longitudinal repeating pattern in the longitudinal and/or cross direction.

15. Use according to claim 12, 13 or 14, **characterized in that** the stylistic element (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) consists of a linear or areal figure which is open or closed, a geometric, amorphous or floral form, a polygonal line or individual, self-contained stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

16. Use according to at least one of claims 12 to 15, **characterized in that** the web of fabric (10, 20, 50, 60) comprises a uniform basic colour (11, 27, 54, 61), or that the web of fabric (10, 20, 50, 60) comprises a colour gradient across the complete length of a longitudinal repeating pattern, and/or that the stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) comprise a colour different from the basic colour (11, 27, 54, 61), the basic colour (11, 27, 54, 61) being present on the complete longitudinal repeating pattern between the multiply arranged stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) and/or within the stylistic elements (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

17. Use according to claim 14, **characterized in that** the seat parts according to at least one of claims 1 to 16 are upholstered with a woven web of fabric (10, 20, 50, 60).

## Revendications

1. Procédé destiné à recouvrir au moins deux sièges (31, 32, 33) d'un ensemble de sièges, en particulier des sièges (31, 32, 33) d'une cabine d'avion, chaque siège (31, 32, 33) présentant au moins un coussin et un dossier,
**caractérisé par**
- la fourniture d'un panneau de tissu tissé (10, 20, 50, 60), le panneau de tissu (10, 20, 50, 60) présentant au moins un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) disposé de manière multiple sur le panneau de tissu (10, 20, 50, 60) à l'intérieur d'un rapport longitudinal et qui est disposé sous la forme d'au moins une accumulation locale, composée d'au moins trois éléments de style pareils sur le panneau de tissu (10, 20, 50, 60) et le rapport longitudinal présente une longueur d'au moins 1,20 m,
- la découpe de plusieurs coupes dans le panneau de tissu (10, 20, 50, 60) et
- le recouvrement au moins des coussins et des dossiers des sièges (31, 32, 33) avec les coupes.

2. Procédé selon la revendication 1, **caractérisé en ce que**
le rapport longitudinal présente une longueur de 3 m à 10 m.

3. Procédé selon la revendication 1 ou 2,
**caractérisé en ce que**
l'élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) présente une densité surfacique différente à l'intérieur d'une accumulation dans la direction longitudinale et/ou la direction transversale du panneau de tissu (10, 20, 50, 60).

4. Procédé selon au moins une des revendications 1 à 3, **caractérisé en ce qu'** un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est disposé dans des couleurs et/ou grandeurs différentes ou identiques à l'intérieur d'un rapport longitudinal.

5. Procédé selon au moins une des revendications 1 à 4, **caractérisé en ce que** plusieurs éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) sont présents, lesquels présentent des couleurs différentes ou semblables et/ou des grandeurs différentes ou semblables.

6. Procédé selon la revendication 3, **caractérisé en ce que** la densité surfacique est rapportée à un segment du panneau de tissu (10, 20, 50, 60) avec une longueur de 0,1 m à 2 m, de préférence 0,2 m.

7. Procédé selon au moins une des revendications 1 à 6, **caractérisé en ce que** le panneau de tissu (10, 20, 50, 60) présente deux ou plusieurs accumulations d'un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) à l'intérieur du rapport longitudinal dans la direction longitudinale et/ou transversale,
et/ou **en ce que** le panneau de tissu (10, 20, 50, 60) présente deux ou plusieurs accumulations de plusieurs éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) à l'intérieur du rapport longitudinal dans la direction longitudinale et/ou transversale.

8. Procédé selon au moins une des revendications 1 à 7, **caractérisé en ce qu'** au moins un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est présent uniquement à l'intérieur d'une accumulation, et/ou **en ce qu'**au moins un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est disposé à l'extérieur des accumulations présentes.

9. Procédé selon au moins une des revendications 1 à 8, **caractérisé en ce que** l'au moins un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est composé d'une figure linéaire ou plane qui est ouverte ou fermée, d'une forme géométrique, amorphe ou florale, d'une ligne en forme de polygone ou d'éléments de style individuels (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) finis en soi.

10. Procédé selon au moins une des revendications 1 à 9, **caractérisé en ce que** le panneau de tissu (10, 20, 50, 60) présente une couleur de base homogène (11, 27, 54, 61), ou **en ce que** le panneau de tissu (10, 20, 50, 60) présente un dégradé de teinte sur toute la longueur d'un rapport longitudinal.

11. Procédé selon au moins une des revendications 1 à 10,
**caractérisé en ce que**
les éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) présentent une couleur différente de la couleur de base (11, 27, 54, 61), la couleur de base (11, 27, 54, 61) étant présente sur tout le rapport longitudinal entre les éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) disposés de manière multiple et/ou à l'intérieur des éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

12. Utilisation d'un panneau de tissu tissé (10, 20, 50, 60) destiné à recouvrir au moins deux sièges (31, 32, 33) d'un ensemble de sièges, en particulier des sièges (31, 32, 33) d'une cabine d'avion, chaque siège (31, 32, 33) présentant au moins un coussin et un dossier, **caractérisée en ce que** le panneau de tissu (10, 20, 50, 60) présente un rapport longitudinal avec une longueur d'au moins 1,20 m, le panneau de tissu (10, 20, 50, 60) présentant au moins un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) disposé de manière multiple sur le panneau de tissu (10, 20, 50, 60) à l'intérieur d'un rapport longitudinal, et qui est disposé sous la forme d'au moins une accumulation locale, composée d'au moins trois éléments de style semblables sur le panneau de tissu (10, 20, 50, 60).

13. Utilisation selon la revendication 12,
**caractérisée en ce que**
l'élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) présente une densité surfacique différente à l'intérieur d'une accumulation dans la direction longitudinale et/ou la direction transversale du panneau de tissu (10, 20, 50, 60), et/ou **en ce qu'**un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est disposé dans des couleurs différentes ou identiques et/ou à l'intérieur d'un rapport longitudinal, et/ou **en ce que** plusieurs éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) sont présents, lesquels présentent des couleurs différentes ou semblables et/ou des grandeurs différentes ou semblables.

14. Utilisation selon la revendication 12 ou 13, **caractérisée en ce que**
le panneau de tissu (10, 20, 50, 60) présente deux ou plusieurs accumulations d'un élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) à l'intérieur du rapport longitudinal dans la direction longitudinale et/ou transversale, et/ou **en ce que** le panneau de tissu (10, 20, 50, 60) présente deux ou plusieurs accumulations de plusieurs éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) à l'intérieur du rapport longitudinal dans la direction longitudinale et/ou transversale.

15. Utilisation selon la revendication 12, 13 ou 14, **caractérisée en ce que** l'élément de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) est composé d'une figure linéaire ou plane, qui est ouverte ou fermée, d'une forme géométrique, amorphe ou florale, d'une ligne en forme de polygone ou d'éléments de style individuels (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) finis en soi.

16. Utilisation selon au moins une des revendications 12 à 15, **caractérisée en ce que**
le panneau de tissu (10, 20, 50, 60) présente une couleur de base homogène (11, 27, 54, 61), ou **en ce que** le panneau de tissu (10, 20, 50, 60) présente un dégradé de teinte sur toute la longueur d'un rapport longitudinal, et/ou **en ce que** les éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) présentent une couleur différente de la couleur de base (11, 27, 54, 61), la couleur de base (11, 27, 54, 61) étant présente sur tout le rapport longitudinal entre les éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65) disposés de manière multiple et/ou à l'intérieur des éléments de style (12, 13, 14, 15, 21, 22, 23, 24, 25, 26, 28, 34, 35, 36, 37, 38, 39, 40, 41, 42, 43, 44, 45, 46, 47, 51, 52, 53, 62, 63, 64, 65).

17. Utilisation selon la revendication 14, **caractérisée en ce que**
les parties de siège sont recouvertes d'un panneau de tissu tissé (10, 20, 50, 60) selon au moins une des revendications 1 à 16.
